# EUROPEAN PATENT SPECIFICATION

(11) **EP 3 044 042 B1**
(45) Date of publication and mention of the grant of the patent: **06.11.2019**
(21) Application number: 14771728.4
(22) Date of filing: 10.09.2014
(51) Int. Cl.: B60R 22/40

(54) **RETRACTOR WITH GIMBALED VEHICLE SENSOR**
FAHRVORRICHTUNG MIT KARDANISCH AUFGEHÄNGTEN FAHRZEUGSENSOR
RETRACTOR AVEC CAPTEUR DE VÉHICULE MONTÉ SUR CARDAN

(30) Priority: 13.09.2013 US 201361877516 P
(43) Date of publication of application: 20.07.2016
(73) Proprietor: Key Safety Systems, Inc., Sterling Heights, MI 48314 (US)
(72) Inventor: CENDEJAS, Luis, Rochester Hills, Michigan 48307 (US); GRZIC, Rudi, Sterling Heights, Michigan 48314 (US); NUNEZ, Luis, Mount Clements, Michigan 48084 (US); VAKIL, Sanjay, Troy, Michigan 48083 (US)
(74) Representative: Gislon, Gabriele
(86) International application number: PCT/US2014/054943
(87) International publication number: WO 2015/038608

(56) References cited:
- EP-A1- 2 610 116
- EP-A2- 1 048 536
- GB-A- 2 010 071
- JP-A- H10 181 526

## Description

### Background and Summary of the Invention

The present invention generally relates to seat belt retractors and more specifically to a seat belt retractor having a gimbaled vehicle sensor.

JPH10181526A discloses a seat belt gimbal retractor comprising a gimbaled vehicle sensor having a gimbal (28) rotationally movable relative to a housing fixed to a portion of the retractor, the retractor including a force generator which is a clutch spring (150) having a coil portion (150A) wound around the axle of the gimbal and two ends (150B) and (150C). One end is attached to a lever 152. Upon movement of the gimbal and the lever, the coil portion is unwound from the axle and the gimbal is free to rotate.
EP1048536 discloses a vehicle seat belt retractor that comprises a frame, a spool rotatably mounted to the frame and a spool locking device that includes actuating means comprising a support carrying a mass and a pawl, the mass being arranged to move from an initial position to actuate the pawl into engagement with the ratchet on the spool. The support is pivotable to effect adjustment of the distance between the pawl and the ratchet.

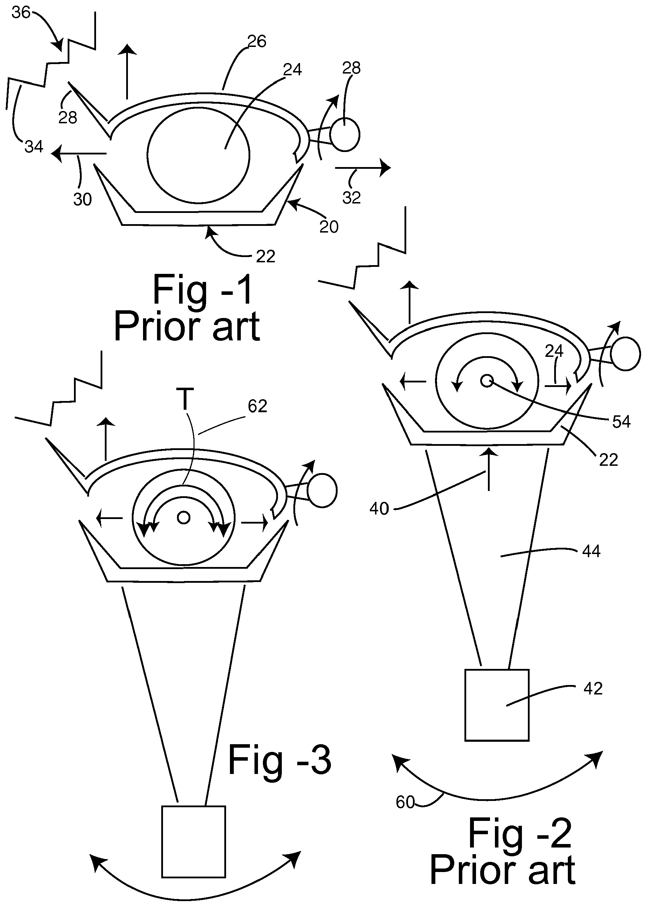

Figure 1 illustrates a rudimentary vehicle sensor 20 comprising a stationary basket 22 fixed to the retractor frame, a mass such as a ball 24 movable on the basket and a sensor pawl 26 rotationally movable about a pivot 28. Pawl 26 includes an engagement tip 29. As the vehicle in which the retractor is mounted accelerates and decelerates as indicated by arrows 30 and 32 the ball 24 will move upon basket 22 lifting pawl 26 into engagement with teeth 34 of the ratchet wheel 36, only a portion of which is shown. A properly designed vehicle sensor is one that will cause pawl 26 to engage the ratchet wheel 36 during an emergency but will not cause spurious engagements such as caused by minor vehicle acceleration or deceleration during braking.

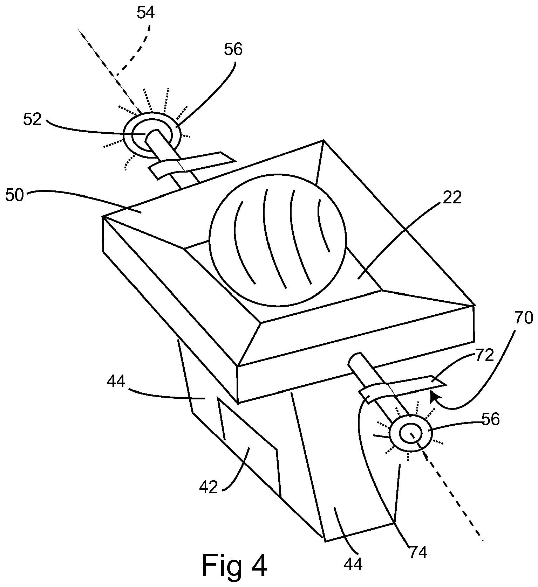

In many vehicles the seat belt retractor is mounted to the back of the vehicle seat. Provision must be made to maintain the basket in a generally vertical position as the seat back is moved through its range of motion. To accommodate this need, gimbaled vehicle sensors have been developed. In general a gimbaled vehicle sensor is one in which the basket can rotate about an axis 40 to maintain an axis perpendicular to the basket in alignment with the local vertical. Reference is made to figure 2 which diagrammatically illustrates a prior art gimbaled sensor and to figure 4 which illustrates features of a gimbaled sensor as well as a component of the present invention. In general a gimbaled vehicle sensor positions mass 42 at a lever arm 44 from the basket 22, the basket 22 is formed as a center portion of a gimbal or rotatable frame 50, having opposing stub axles 52 which are aligned with axis 54. Each stub axle is received within a bushing 56 which is part of the housing, not illustrated in figures 2 or 4, which is secured to the frame of the seat belt retractor. As the vehicle seat back is moved it carries the retractor with it, mass 42 will tend to align the pivoted gimbal 50 with vertical, maintaining the basket 22 and mass or ball 24 in the desired orientation.

More specifically the invention comprises: a seat belt retractor comprising a gimbaled vehicle sensor having a gimbal 160 rotationally movable relative to a housing fixed to a portion of the retractor, the retractor including a force generator generating a force which upon movement of the gimbal creates a torque on the axles or axle to slow or damp the motion of the gimbal relative to the housing. In one embodiment, the force generator comprises a member capable of generating a force that acts perpendicular to the axis of rotation of the gimbal. The gimbal includes a stub axle of a fixed diameter and further includes a concentric disk having a greater diameter, wherein the force generator acts upon the concentric disk. In the preferred embodiment of the invention the force generator comprises a length of spring steel with an engagement end that is one of curved or flat. Other embodiments are shown and described.

### Brief Description of the Drawings

Figure 1 illustrates a prior art vehicle sensor.
Figure 2 diagrammatically illustrates a prior art gimbaled vehicle sensor.
Figure 3 diagrammatically illustrates the operation of the present invention.
Figure 4 diagrammatically illustrates the major components of the present invention.
Figure 5 is an enlarged view of a portion of figure 4.
Figures 6 and 7 show alternate embodiments of the invention.
Figure 8 shows an isolated view of a gimbaled vehicle sensor in accordance with the present invention.
Figure 9 shows a side view of the present invention.
Figure 10 is an exploded view of the present invention.
Figure 11 is an enlarged portion of the vehicle sensor of the present invention.
Figure 12 shows a seat belt retractor with the gimbaled vehicle sensor.
Figures 13 and 14 show other embodiments of the invention.

### Detailed Description of the Drawings

Reference is again made to figure 2 which illustrates an operational state of the prior art gimbaled vehicle sensor. If the vehicle in which this sensor is mounted decelerates, this mass 24 will move to the right, in figure 2 and simultaneously the lower mass 42 will rotate to the right along arc 60. This compound motion for a given acceleration and a similar motion for deceleration will tend to place the bowl 22 closer to pawl 26 than might occur with the stationary vehicle sensor as illustrated in figure 1. The result of this compound motion increases the probability of a lock of the seat belt retractor thereby creating a nuisance or annoyance to the wearer of the seat belt, such a situation is often referred to as a nuisance lock. Figure 3 illustrates the principle of the present invention as applied to a prior art vehicle sensor, if it were possible to create a retarding torque T or 62; this would tend to reduce the motion and the level of swing of basket 22 during these dynamic conditions which reduces the possibility of nuance lock.

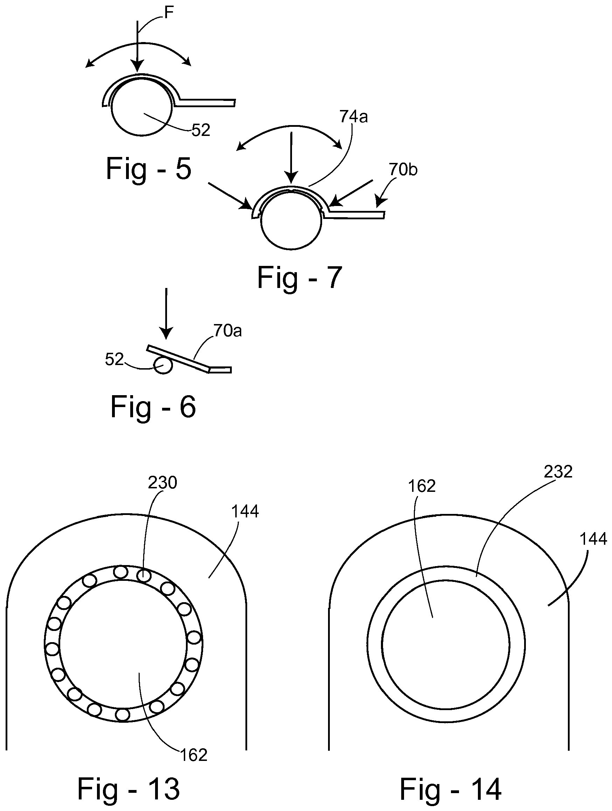

Reference is again made to figure 4 which illustrates one means of generating the torque 62; this means comprises at least one engagement arm or force generator 70, two are shown, formed of a length of spring steel having a mounting arm 72 and an engagement end 74. As illustrated in figures 4 and 5, the engagement end 74 is curved and loads axle 52 with a known force F. Figure 6 illustrates an alternative embodiment in which the engagement arm 70a is generally straight. In both figures 5 and 6 the engagement arm contacts axle 52 at a tangent point. Figure 7 illustrates an embodiment of engagement arm 70b in which the engagement end 74a is curved but contacts axle 52 at multiple points. In each case the radial or normal forces create a frictional torque to retard the motion of the axle, gimbal or basket.

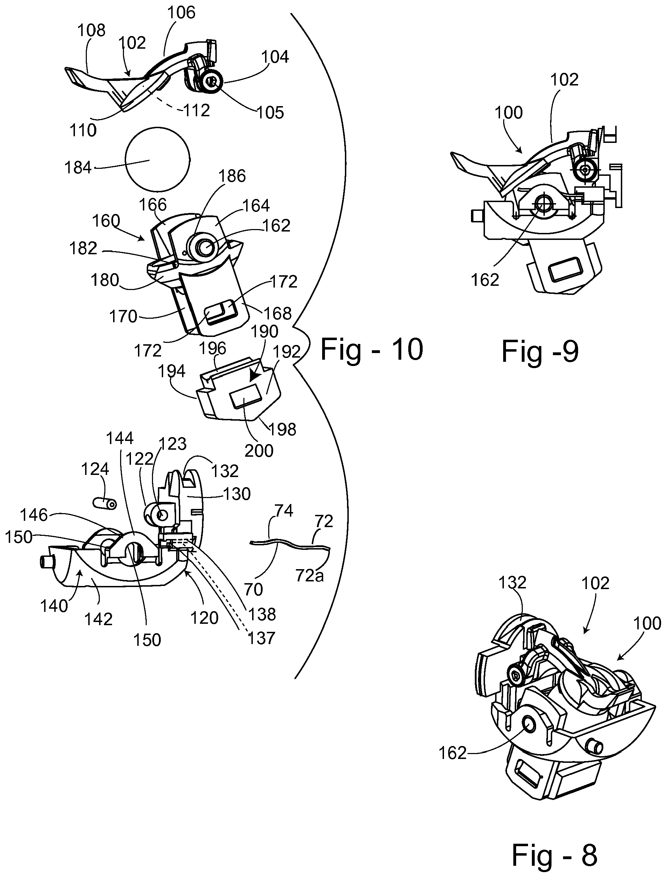

Reference is made to figures 8-10 which illustrate major components of the present invention. The vehicle sensor 100 comprises a sensor pawl 102 having a sensor arm 106 pivoted about a hinge component 104, the sensor arm terminates in a tooth 108. Extending from an underside of arm 106 is a cap 110 that has a concave undersurface 112. The tooth 108 is adapted to engage the teeth 34 of the toothed wheel 36. Hinge component 104 is adapted to mate with the hinge component 122 of the housing 120. Hinge component 104 including two legs 104a and 104b each of which includes an aligned opening 105. Hinge component 122 includes a stub, projection or axle 122a with an opening 123. Legs 104a and 104b are received about stub 122a and a pin 124 extends through the various openings and completes the hinge.

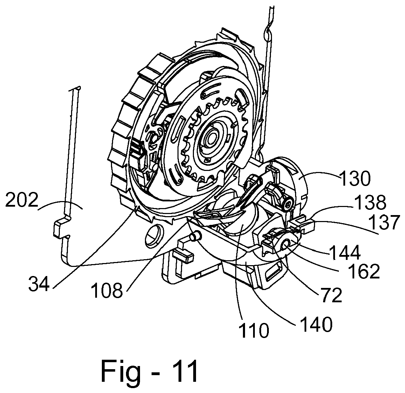

The housing 120 includes an upper housing part 130 having a slot 132 adapted to fit within a mating portion of the retractor frame. The housing also includes a lower housing part 140 comprising a lower basket 142 and a plurality of arched members 144 and 146; each of the arched members 144 and 146 includes an opening 150 which functions as a bushing to receive a respective one of the stub axles 162 of the gimbal 160. Gimbal 160 includes a first and second upraised plate 164 and 166. One of the stub axles 162 extends from each of the plates 164 and 166; only one stub axle is illustrated in figure 10. The gimbal 160 also includes two lower extending plates 168 and 170 each of which includes an oblong opening 172. The basket 180 which supports a spherical mass 184 is suspended across the plates 164 and 166. The basket 180 has a concave inner surface 182 which permits the mass 184 to roll thereon. Gimbal 160 further includes a projection or disk 186 that is circular in shape and concentric with stub axle 162. As illustrated one such disk 186 is associated with plate 164. Another disk 186 can be positioned and associated with plate 166. As mentioned above the present invention also includes the engagement arm 70 with its mounting arm 72 and engagement end 74. The distal end 72a of the mounting arm is received in a slit 137 of a retainer 138 attached proximate the first housing part 130, shown in detail in figure 11.

The plates 168 and 170 are adapted to hold a second mass 190. As illustrated the mass 190 includes two flat parallel sides 192 and 194, which fit against the flat sides of plates 168 and 170, a top 196 and a bottom 198, which is generally conical shaped. Extending from each side 192 and 194 respectively is a tapered projection 200 adapted to snap fit into the openings 172 of plates 168 and 170 which move apart slightly as the mass 190 is inserted. When assembled as shown in figures 8 and 9 the gimbal 160 via its stub axles 162 can rotate with regard to the bushings 150 of the lower housing member 140. In a steady state the axis extending through the stub axle also extends through the mass 184.

In operation the orientation of the retractor changes with the orientation of the seat back; the sensor housing 120 will move with the retractor. The gimbal 160 is free to move as the stub axles 162 rotate about the bushings 150 in view of the gravity bias resulting from mass 190. The mass 190 will tend to maintain the verticality of gimbal 160. Engagement arm 72 generates a compressive force on the stub axle 162; as mentioned there could be one or two engagement arms depending upon need and space. As the stub axle rotates this compressive force will generate a tangential motion sensitive torque tending to slow or damp the rotation of the gimbal 160 relative to the housing 120. The activation arm acts on the larger diameter surface of the circular projection or disk 186 which generates a greater torque than if the activation arm operated on the smaller diameter stub axle. During an emergency situation the mass 184 will move upon the inner surface 182 of the basket 180 and engaging cap 110 causing tooth 108 to engage one of the teeth 34 to initiate the locking of the retractor as shown below.

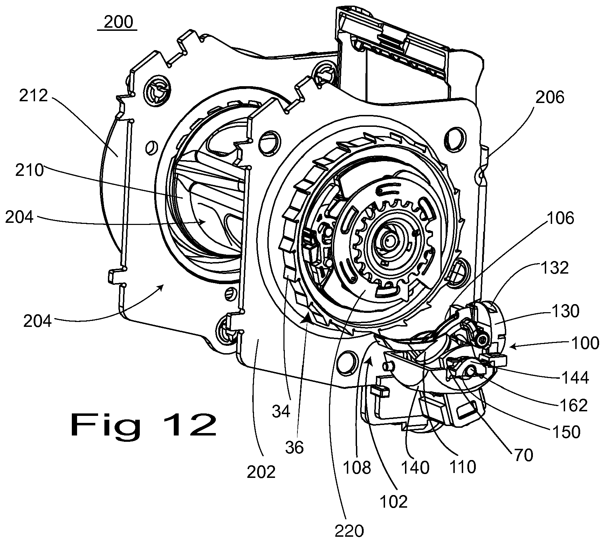

Reference is briefly made to figure 12 which illustrates a seat belt retractor 200a including the above described gimbaled vehicle sensor 100. The retractor includes a frame 203 having a frame first side 202, a second frame side 202a and a back frame side 206. The gimbaled sensor 100 is mounted to the first frame side 202 of the retractor. The side frames rotationally support a spool 210 upon which is wound a length of seat belt webbing. A rotational spring, not shown, is mounted within a spring housing 212 and acts upon one end of the spool. The spring housing is mounted to side frame 202a. A locking mechanism 220 which includes a vehicle web sensor 221 is mounted to side frame 202 and includes ratchet wheel 36. This locking mechanism is relatively conventional. In response to a vehicle deceleration which would typically be greater than 0.45g the spherical mass 184 lifts arm 106 bringing the tooth 108 into engagement with tooth 34 of the ratchet wheel 36, which brings into motion the locking mechanism preventing the rotation of spool 210 and extension of the seat belt..

Reference is briefly made to figures 13 and 14 which illustrate alternate embodiments of the invention. In these embodiments the force generator 70 comprising the spring steel element is replaced in figure 13 with a bearing 230 designed to generate the required opposing motion sensitive torque. This bearing 230 can be a ball bearing or bearing configured to have an inner and outer race with for example silicate powder captured therebetween which will generate a damping torque of approximately 1 - 3 Newtons. The inner race supports shaft 262 and the outer race is connected to the arched member 144. In figure 14, the bearing 230 is replaced with a friction surface 232 configured to generate a torque in opposition to the motion of the shaft 262.

Many changes and modifications in the above-described embodiment of the invention can, of course, be carried without departing from the scope thereof. Accordingly, that scope is intended to be limited only by the scope of the appended claims.

## Claims

1. A seat belt retractor comprising a gimbaled vehicle sensor (100) having a gimbal (160) provided with a stub axle (162) and rotationally movable relative to a housing (140) fixed to a portion of the retractor, **characterized in that** the retractor includes a force generator (70) generating a radial force which upon movement of the gimbal (160) creates a tangential torque (62) on said stub axle (162) to slow or damp the motion of the gimbal relative to the housing (140), wherein said torque (62) is a frictional torque.

2. The seat belt retractor according to claim 1 wherein the force generator (70) comprises a member capable of generating a force that acts perpendicular to an axis of rotation of gimbal (160).

3. The seat belt retractor according to claim 2 wherein the gimbal includes a pair of stub axles (162) of a fixed diameter and each stub axle further includes a concentric disk (186) having a greater diameter and wherein the force generator acts upon the concentric disk (186).

4. The seat belt retractor according to claim 2 wherein the force generator comprises a length of spring steel with a mounting arm (72) and an engagement end (74) that is one of curved or flat.

5. The seat belt retractor according to claim 4 wherein the engagement arm (74) contacts the axle (52) at a tangent point or at multiple tangent points.

6. The seat belt retractor according to claim 5 wherein the engagement arm (74) applies a radial or normal force to create a frictional torque to retard motion of the axle, gimbal or basket.

7. The seat belt retractor according to claim 3 wherein the housing (140) is a lower housing part (140) comprising a lower basket (142) and a plurality of arched members (144 and 146), each of the arched members (144 and 146) includes an opening (150) which functions as a bushing to receive a respective one of the stub axles (162) of the gimbal (160).

8. The seat belt retractor according to claim 7 wherein gimbal (160) includes a first and second upraised plate (164 and 166), one of the stub axles (162) extends from each of the plates (164 and 166).

9. The seat belt retractor according to claim 8 wherein the gimbal (160) also includes two lower extending plates (168 and 170) each of which includes an oblong opening (172), and the basket (180) which supports a spherical mass (184) is suspended across the plates (164 and 166).

10. The seat belt retractor according to claim 9 wherein the basket (180) has a concave inner surface (182) which permits the mass (184) to roll thereon.

11. The seat belt retractor according to claim 10 wherein gimbal (160) further includes a projection or disk (186) that is circular in shape and concentric with stub axle (162), one such disk (186) is associated with plate (164), another disk (186) can be positioned and associated with plate (166)

12. The seat belt retractor according to claim 11 wherein distal end (72a) of the mounting arm (72) is received in a slit (137) of a retainer (138) attached proximate a first upper housing part (130).

13. The seat belt retractor according to claim 12 wherein plates (168 and 170) are adapted to hold a second mass (190), the mass (190) includes two flat parallel sides (192 and 194), which fit against the flat sides of plates (168 and 170), a top (196) and a bottom (198), which is generally conical shaped, extending from each side (192 and 194) respectively is a tapered projection (200) adapted to snap fit into openings (172) of plates (168 and 170) which move apart slightly as the mass (190) is inserted.

14. The seat belt retractor according to claim 13 wherein when assembled, the gimbal (160) via its stub axles (162) can rotate with regard to the bushings (150) of the lower housing member (140), in a steady state the axis extending through the stub axle also extends through the mass (184).

15. The seat belt retractor (200a) including the gimbaled vehicle sensor (100) of claim 9 further comprises a frame (203) having a frame first side (202), a second frame side (202a) and a back frame side (206), the gimbaled sensor (100) is mounted to the first frame side (202) of the retractor, wherein the frames first and second sides rotationally support a spool (210) upon which is wound a length of seat belt webbing and in response to a vehicle deceleration which would typically be greater than 0.45g the spherical mass (184) lifts arm (106) bringing a tooth (108) into engagement with a tooth (34) of a ratchet wheel (36), which brings into motion a locking mechanism preventing the rotation of spool (210) and extension of the seat belt.

16. The seat belt retractor according to claim 1 wherein the force generator (70) comprising a bearing (230) designed to generate the required opposing motion sensitive torque, the bearing (230) can be a ball bearing or bearing configured to have an inner and outer race with silicate powder captured therebetween which will generate a damping torque of approximately 1 - 3 Newtons.

17. The seat belt retractor according to claim 16 wherein the inner race supports shaft (262) and the outer race is connected to the arched member 144.

18. The seat belt retractor according to claim 1 wherein the force generator (70) further comprises friction surface (232) configured to generate a torque in opposition to the motion of the shaft (262).

## Patentansprüche

1. Sicherheitsgurtaufroller, umfassend einen kardanisch aufgehängten Fahrzeugsensor (100), welcher eine kardanische Aufhängung (160) aufweist, welche einen Achsschenkel (162) aufweist und relativ zu einem Gehäuse (140) drehbeweglich ist, welches an einem Abschnitt des Aufrollers befestigt ist, **dadurch gekennzeichnet, dass** der Aufroller einen Krafterzeuger (70) umfasst, welcher eine Radialkraft erzeugt, welche bei einer Bewegung der kardanischen Aufhängung (160) ein tangentiales Drehmoment (62) auf dem Achsschenkel (162) erzeugt, um die Bewegung der kardanischen Aufhängung relativ zum Gehäuse (140) zu verzögern oder zu dämpfen, wobei das Drehmoment (62) ein Reibungsdrehmoment ist.

2. Sicherheitsgurtaufroller nach Anspruch 1, wobei der Krafterzeuger (70) ein Glied umfasst, welches in der Lage ist, eine Kraft zu erzeugen, welche senkrecht zu einer Drehachse der kardanischen Aufhängung (160) steht.

3. Sicherheitsgurtaufroller nach Anspruch 2, wobei die kardanische Aufhängung ein Paar von Achsschenkeln (162) umfasst, welche einen festen Durchmesser aufweisen und jeder Achsschenkel ferner eine konzentrische Scheibe (186) umfasst, welche einen größeren Durchmesser aufweist und wobei der Krafterzeuger auf die konzentrische Scheibe (186) einwirkt.

4. Sicherheitsgurtaufroller nach Anspruch 2, wobei der Krafterzeuger einen Abschnitt aus Federstahl umfasst, welcher einen Haltearm (72) und ein Eingriffsende (74) aufweist, welches gekrümmt oder flach ist.

5. Sicherheitsgurtaufroller nach Anspruch 4, wobei der Eingriffsarm (74) die Achse (52) an einem Tangentenpunkt oder an einer Mehrzahl von Tangentenpunkten berührt.

6. Sicherheitsgurtaufroller nach Anspruch 5, wobei der Eingriffsarm (74) eine radiale oder normale Kraft aufbringt, um ein Reibungsdrehmoment zu erzeugen, um die Bewegung der Achse, der kardanischen Aufhängung oder des Korbs zu verlangsamen.

7. Sicherheitsgurtaufroller nach Anspruch 3, wobei das Gehäuse (140) ein unteres Gehäuseteil (140) ist, welches einen unteren Korb (142) und eine Mehrzahl von bogenförmigen Gliedern (144 und 146) umfasst, wobei jedes der bogenförmigen Glieder (144 und 146) eine Öffnung (150) umfasst, welche als Buchse wirkt, um einen entsprechenden der Achsschenkel (162) der kardanischen Aufhängung (160) aufzunehmen.

8. Sicherheitsgurtaufroller nach Anspruch 7, wobei die kardanische Aufhängung (160) eine erste und eine zweite erhobene Platte (164 und 166) umfasst, wobei einer der Achsschenkel (162) sich von jeder der Platten (164 und 166) erstreckt.

9. Sicherheitsgurtaufroller nach Anspruch 8, wobei die kardanische Aufhängung (160) ferner zwei unteren sich erstreckenden Platten (168 und 170) umfasst, welche jeweils eine längliche Öffnung (172) umfassen, und der Korb (180), welcher eine sphärische Masse (184) trägt, über die Platten (164 und 166) aufgehängt ist.

10. Sicherheitsgurtaufroller nach Anspruch 9, wobei der Korb (180) eine konkave Innenfläche (182) aufweist, welche ermöglicht, dass die Masse (184) darauf rollt.

11. Sicherheitsgurtaufroller nach Anspruch 10, wobei die kardanische Aufhängung (160) ferner einen Vorsprung oder eine Scheibe (186) umfasst, welche kreisförmig und zum Achsschenkel (162) konzentrisch ist, wobei eine solche Scheibe (186) der Platte (164) zugeordnet ist, wobei eine andere Scheibe (186) mit der Platte (166) positioniert und dieser zugeordnet werden kann.

12. Sicherheitsgurtaufroller nach Anspruch 11, wobei das distale Ende (72a) des Haltearms (72) in einem Schlitz (137) eines Halters (138) aufgenommen ist, welcher in der Nähe eines ersten oberen Gehäuseteils (130) befestigt ist.

13. Sicherheitsgurtaufroller nach Anspruch 12, wobei die Platten (168 und 170) angepasst sind, um eine zweite Masse (190) zu halten, wobei die Masse (190) zwei flache parallele Seiten (192 und 194) umfasst, welche gegen den flachen Seiten der Platten (168 und 170), einen Oberteil (196) und einen Unterteil (198), welches im Wesentlichen konisch ist, passen und wobei sich von jeder Seite (192 und 194) jeweils ein verjüngter Vorsprung (200) erstreckt, welcher angepasst ist, um in Öffnungen (172) von Platten (168 und 170) einzuschnappen, welche sich leicht auseinanderbewegen, wenn die Masse (190) eingeführt wird.

14. Sicherheitsgurtaufroller nach Anspruch 13, wobei, im montierten Zustand, die kardanische Aufhängung (160) relativ zu den Buchsen (150) des unteren Gehäuseglieds (140) über ihre Achsschenkel (162) drehbar ist, wobei in einem Gleichgewichtszustand die Achse, die sich durch die Achsschenkel erstreckt, sich auch durch die Masse (184) erstreckt.

15. Sicherheitsgurtaufroller (200a), umfassend den kardanisch aufgehängten Fahrzeugsensor (100) nach Anspruch 9, ferner umfassend einen Rahmen (203), welcher eine erste Rahmenseite (202), eine zweite Rahmenseite (202a) und eine Rahmenrückseite (206) aufweist, wobei der kardanisch aufgehängte Sensor (100) an der ersten Rahmenseite (202) des Aufrollers montiert ist, wobei die erste und zweite Rahmenseite eine Spule (210) drehbar tragen, auf welcher ein Abschnitt eines Sicherheitsgurtbandes aufgewickelt ist und wobei, als Reaktion auf eine Fahrzeugverzögerung, welche typischerweise größer als 0,45 g ist, die sphärische Masse (184) den Arm (106) anhebt, wodurch ein Zahn (108) in Eingriff mit einem Zahn (34) eines Klinkenrads (36) gebracht wird, sodass ein Verriegelungsmechanismus in Bewegung gebracht wird, welcher die Drehung der Spule (210) und eine Verlängerung des Sitzgurtes verhindert.

16. Sicherheitsgurtaufroller nach Anspruch 1, wobei der Krafterzeuger (70) ein Lager (230) umfasst, das ausgebildet ist, um das benötigte Gegenbewegungsempfindlichkeitsdrehmoment zu erzeugen, wobei das Lager (230) ein Kugellager oder ein Lager sein kann, welches konfiguriert ist, um eine innere und eine äußere Bahn aufzuweisen, wobei Silikatpulver dazwischen eingefangen ist, welches ein Dämpfungsdrehmoment von etwa 1 bis 3 Newton erzeugt.

17. Sicherheitsgurtaufroller nach Anspruch 16, wobei die innere Bahn eine Welle (262) lagert und die äußere Bahn mit dem bogenförmigen Glied (144) verbunden ist.

18. Sicherheitsgurtaufroller nach Anspruch 1, wobei der Kraftgenerator (70) ferner eine Reibungsfläche (232) umfasst, welche konfiguriert ist, um ein Drehmoment zu erzeugen, welches der Bewegung der Welle (262) entgegenwirkt.

## Revendications

1. Rétracteur de ceinture de sécurité, comprenant un capteur de véhicule (100) monté sur cardan, comportant un cardan (160) comportant un demi-essieu (162) et pouvant se déplacer de manière rotative par rapport à un boitier (140) fixé sur une partie du rétracteur, **caractérisé en ce que** le rétracteur inclut un générateur de force (70) générant une force radiale, qui crée, lors d'un déplacement du cardan (160), un couple tangentiel (62) audit demi-essieu (162) pour ralentir ou amortir le déplacement du cardan par rapport au boîtier (140), ledit couple (62) étant in couple de frottement.

2. Rétracteur de ceinture de sécurité selon la revendication 1, dans lequel le générateur de force (70) comprend un élément capable de générer une force agissant perpendiculairement sur un axe de rotation du cardan (160).

3. Rétracteur de ceinture de sécurité selon la revendication 2, dans lequel le cardan inclut une paire de demi-essieux (162) ayant un diamètre fixe, chaque demi-essieu incluant en outre un disque concentrique (186) ayant un diamètre supérieur et dans lequel le générateur de force agit sur le disque concentrique (186).

4. Rétracteur de ceinture de sécurité selon la revendication 2, dans lequel le générateur de force comprend une longueur d'acier à ressort avec un bras de montage (72) et une extrémité d'engagement (74) courbée ou plate.

5. Rétracteur de ceinture de sécurité selon revendication 4, dans lequel le bras d'engagement (74) contacte l'essieu (52) au niveau d'un point de tangence ou au niveau de multiples points de tangence.

6. Rétracteur de ceinture de sécurité selon la revendication 5, dans lequel le bras d'engagement (74) applique une force radiale ou normale pour créer un couple de frottement afin de retarder le déplacement de l'essieu, du cardan ou d'un panier.

7. Rétracteur de ceinture de sécurité selon la revendication 3, dans lequel le boîtier (140) est une partie inférieure de boîtier (140) comprenant un panier inférieur (142) et plusieurs éléments arqués (144 et 146), chacun des éléments arqués (144 et 146) incluant une ouverture (150) faisant fonction de douille pour recevoir un essieu respectif des demi-essieux (162) du cardan (160).

8. Rétracteur de ceinture de sécurité selon la revendication 7, dans lequel le cardan (160) inclut une première et une deuxième plaques surélevées (164 et 166), l'un des demi-essieux (162) s'étendant à partir de chacune des plaques (164 et 166).

9. Rétracteur de ceinture de sécurité selon la revendication 8, dans lequel le cardan (160) inclut en outre deux plaques inférieures à extension (168 et 170), chacune incluant une ouverture oblongue (172), et le panier (180) supportant une masse sphérique (184) étant suspendu à travers les plaques (164 et 166).

10. Rétracteur de ceinture de sécurité selon la revendication 9, dans lequel le panier (180) comporte une surface interne concave (182) permettant le roulement de la masse (184) sur celle-ci.

11. Rétracteur de ceinture de sécurité selon la revendication 10, dans lequel le cardan (160) inclut en outre une saillie ou un disque (186) de forme circulaire concentrique au demi-essieu (162), un dit disque (186) étant associé à la plaque (164), un autre disque (186) pouvant être positionné et associé à la plaque (166).

12. Rétracteur de ceinture de sécurité selon la revendication 11, dans lequel l'extrémité distale (72a) du bras de montage (72) est reçue dans une fente (137) d'un élément de retenue (138) fixé en un point proximal par rapport à la partie supérieure (130) de boîtier.

13. Rétracteur de ceinture de sécurité selon la revendication 12, dans lequel les plaques (168 et 170) sont adaptées pour retenir une deuxième masse (190), la masse (190) incluant deux côtés parallèles plats (192 et 194), ajustés contre les côtés plats des plaques (168 et 170), une partie supérieure (196) et une partie inférieure (198) ayant en général une forme conique, dans lequel une saillie effilée (200) adaptée pour s'encliqueter dans des ouvertures (172) des plaques (168 et 170) qui s'écartent légèrement lorsque la masse (190) est insérée, s'étend respectivement à partir de chaque côté (192 et 194).

14. Rétracteur de ceinture de sécurité selon la revendication 13, dans lequel, après l'assemblage, le cardan (160) peut tourner par l'intermédiaire de ses demi-essieux (162) par rapport aux douilles (150) de l'élément de boîtier inférieur (140), dans un état stable l'axe s'étendant à travers le demi-essieu s'étendant également à travers la masse (184).

15. Rétracteur de ceinture de sécurité (200a) incluant le capteur de véhicule monté sur cardan (100) selon la revendication 9, comprenant en outre un cadre (203) comportant un premier côté de cadre (202), un deuxième côté de cadre (202a) et un côté arrière de cadre (206), le capteur monté sur cardan (100) étant monté sur le premier côté du cadre (202) du rétracteur, dans lequel les premier et deuxième côtés du cadre supportent de manière rotative une bobine (210) sur laquelle est enroulée une longueur de la sangle de la ceinture de sécurité, et en réponse à une décélération du véhicule, typiquement supérieure à 0,45 g, la masse sphérique (184) soulève le bras (106) engageant une dent (108) dans une dent (34) d'une roue à rochet (36) mettant un mécanisme de verrouillage en mouvement empêchant la rotation de la bobine (210) et l'extension de la ceinture de sécurité.

16. Rétracteur de ceinture de sécurité selon la revendication 1, dans lequel le générateur de force (70) comprend un roulement (230) destiné à générer le couple sensible au mouvement opposé requis, le roulement (230) pouvant être un roulement à billes ou un roulement configuré pour comporter un chemin de roulement interne et externe, avec de la poudre de silicate capturée entre eux, générant un couple d'amortissement d'environ 1 à 3 Newtons.

17. Rétracteur de ceinture de sécurité selon la revendication 16, dans lequel le chemin de roulement interne support un arbre (262), le chemin de roulement externe étant connecté à l'élément arqué (144).

18. Rétracteur de ceinture de sécurité selon la revendication 1, dans lequel le générateur de force (70) comprend en outre une surface de frottement (232) configurée pour générer un couple s'opposant au déplacement de l'arbre (262).
